# EUROPÄISCHE PATENTSCHRIFT

(11) **EP 0 921 290 B1**
(45) Veröffentlichungstag und Bekanntmachung des Hinweises auf die Patenterteilung: **01.02.2006**
(21) Anmeldenummer: 98121627.8
(22) Anmeldetag: 12.11.1998
(51) Int. Cl.: F02B 75/02, F02F 1/42, F02B 23/02, F02B 9/06, F02B 45/00

(54) **Verfahren und Vorrichtung zur Umwandlung von Wärme in Arbeit**
Process and device for conversion of heat into work
Procédé et dispositif pour la conversion de chaleur en travail

(30) Priorität: 02.12.1997 DE 19753407
(43) Veröffentlichungstag der Anmeldung: 09.06.1999
(73) Patentinhaber: GVP Gesellschaft zur Vermarktung der Porenbrennertechnik mbH, 91058 Erlangen (DE)
(72) Erfinder: Durst, Franz, 91094 Langensendelbach (DE); Weclas, Miroslav, 91094 Langensendelbach (DE)
(74) Vertreter: Gassner, Wolfgang

(56) Entgegenhaltungen:
- DE-A- 3 504 376
- DE-A- 4 322 109
- US-A- 3 923 011
- US-A- 4 322 109
- US-A- 4 381 745

## Beschreibung

Die Erfindung betrifft ein Verfahren sowie eine Vorrichtung zur Umwandlung von Wärme in Arbeitnach dem Oberbegriff der Ansprüche 1 und 15.

Nach dem Stand der Technik ist es bekannt, zur Umwandlung von Wärme in Arbeit die infolge einer Verbrennung eines verdichteten gasförmigen Brennmittels, wie eines Luft-/Brennstoff-Gemischs erzeugte Volumenexpansion zur Gewinnung mechanischer Arbeit zu nutzen: Im Otto-Motor wird durch die infolge der Zündung eines im Zylinder verdichteten Luft-/Brennstoff-Gemischs hervorgerufene Volumenexpansion ein Kolben vom Zylinderkopf wegbewegt. Diese Bewegung wird über ein Pleuel auf eine Kurbelwelle übertragen.

Ein solches Verfahren bzw. eine solche Vorrichtung ist aus der US 3,923,011 bekannt. Dabei ist ein den Brennraum einer Verbrennungskraftmaschine teilweise erfüllender, plattenförmiger Katalysator vorgesehen. Der Katalysator hat den Zweck, die bei der Verbrennung gebildeten Verbrennungsgase unschädlich zu machen.

Die US-A-4,381,745 beschreibt eine Vorrichtung, bei der der Brennraum teilweise mit einem Porenkörper erfüllt ist. Beim Betrieb sammelt sich innerhalb des Porenkörpers Asche an, welche in besonderen Reinigungszyklen entfernt werden muss. Mit der bekannten Vorrichtung ist insbesondere eine vollständige und flammenlose Verbrennung im Porenkörper nicht möglich.

Beim bekannten Verfahren erfolgt die Verbrennung unter Bildung einer Flamme. Daraus ergeben sich die folgenden Nachteile:
a) Es entstehen als Verbrennungsgase u.a. schädliche NOₓ₋Gase.
b) Die Verbrennung ist infolge einer meist unzureichenden Verteilung und Mischung des Luft-/Brennstoff-Gemischs im Brennraum unvollständig, und uneffizient.
c) Infolge der unvollständigen Verbrennung entsteht als Verbrennungsrückstand schädlicher Ruß.
d) Aus Gründen des Umweltschutzes ist eine kostenaufwendige katalytische Reinigung der Verbrennungsgase oder ein Abtrennung der Verbrennungsrückstände aus dem Abgasstrom erforderlich.

Aus der DE 43 22 109 A1 ist ein Brenner zur Verbrennung einer Gas-/Luft-Gemischs bekannt. Der Brennraum ist mit einem Porenkörper gefüllt. Die vom Brenner erzeugte Wärme wird z.B. als Heißwasser oder Dampf abgeführt und kann in weiteren Prozessen zur Heizung oder zum Betrieb von Turbinen verwendet werden. - Der Wirkungsgrad beim Einsatz des bekannten Brenners zur Erzeugung von Arbeit ist infolge der Notwendigkeit des Vorsehens eines Wärmetauschers relativ gering. Ein weiterer Nachteil besteht darin, dass der bekannte Brenner nur kontinuierlich und mit geringer Brennstoffdichte betreibbar ist. Die Verwendung von Flüssigbrennstoff ist verfahrensbedingt nicht möglich.

Aufgabe der vorliegenden Erfindung ist es, ein Verfahren und eine Vorrichtung zur Umwandlung von Wärme in Arbeit anzugeben, welche die vorgenannten Nachteile beseitigen. Ziel der Erfindung ist es weiterhin, Wärme auf möglichst kostengünstige Weise so in Arbeit umzusetzen, dass der Wirkungsgrad der Umsetzung verbessert und die Verbrennungsgase möglichst sauber sind.

Diese Aufgabe wird durch die Merkmale der Ansprüche 1 und 15 gelöst. Zweckmäßige Weiterbildungen ergeben sich aus den Merkmalen der Ansprüche 2 bis 14 und 16 bis 33.

Nach Maßgabe des erfindungsgemäßen Verfahrens ist vorgesehen, dass die Verbrennung vollständig flammenlos in dem den Brennerraum erfüllenden Porenkörper erfolgt. Die überraschenderweise gelingende flammenlose Verbrennung eines verdichteten gasförmigen Brennmittels in einem Porenkörper bewirkt eine vollständige und schadstoffarme Verbrennung. Die Notwendigkeit einer kostenaufwendigen katalytischen Reinigung der Verbrennungsgase oder eine Abtrennung von Verbrennungsrückständen aus dem Abgasstrom entfällt. Wärme kann auf diese Weise mit einem hohen Wirkungsgrad und insbesondere unter Verwendung von leicht handhabbarem Flüssigbrennstoff, wie leichtes Heizöl, Benzin und dergleichen, in Arbeit umgewandelt werden.

Nach einem Ausgestaltungsmerkmal wird das gasförmige Brennmittel bzw. das brennbare Gas oder das Luft-/Brennstoff-Gemisch vor der Verbrennung im Porenkörper vorgeheizt. Es wird dazu zweckmäßigerweise die bei der vorhergehenden Verbrennung auf den Porenkörper übertragene Wärme genutzt. Das Vorheizen des gasförmigen Brennmittels bewirkt eine besonders homogene Verteilung und trägt zu einer vollständigen und schadstoffarmen Verbrennung bei.

Nach einem weiteren Ausgestaltungsmerkmal steht der Porenkörper mit einem Verdichtungsraum in Verbindung. Der Porenkörper kann z.B. den Brennraum in nach dem Stand der Technik bekannten Motoren, wie Otto-, Diesel-, Wankel-Motor oder dergleichen, erfüllen.

Luft oder das gasförmige Brennmittel können unmittelbar dem Verdichtungsraum zugeführt werden. Es ist aber auch möglich, Luft oder das gasförmige Brennmittel durch den Porenkörper dem Verdichtungsraum zuzuführen. In diesem Fall erfolgt schon bei der Zufuhr in den Verdichtungsraum eine Vorwärmung der Luft oder des gasförmigen Brennmittels im durch die vorhergehende Verbrennung vorgeheizten Porenkörper.

Anschließend wird die Luft oder das gasförmige Brennmittel unter gleichzeitiger Verdichtung in den Porenkörper überführt. - Die Verdichtung bewirkt eine weitere Erwärmung.

Das Luft-/Brennstoff-Gemisch kann nach einem weiteren Ausgestaltungsmerkmal außerhalb des Porenraums, z.B. in einem Vergaser, hergestellt werden. Sofern vom Verbrennungsraum im wesentlichen Luft in den Porenkörper überführt worden ist, kann das Luft-/Brennstoff-Gemisch auch innerhalb des Porenkörpers hergestellt werden, indem der Brennstoff unmittelbar dem Porenkörper zugeführt wird. Das kann z.B. durch Einspritzen von Flüssigbrennstoff unter hohem Druck erfolgen. In diesem Fall wird der Brennstoff vorteilhafterweise im Porenkörper verdampft. Dazu kann wiederum die bei der vorhergehenden Verbrennung auf den Porenkörper übertragene Wärme genutzt werden. Die Verdampfung bewirkt eine homogene Mischung des Brennstoffs mit der verdichteten Luft. Das brennbares Gas ist vorzugsweise Propan oder Butan.

Nach einem weiteren vorteilhaften Ausgestaltungsmerkmal kann das gasförmige Brennmittel im Porenkörper mit Verbrennungsgasen gemischt werden. Es ist auch möglich, Luft oder gasförmiges Brennmittel außerhalb des Porenkörpers, vorzugsweise im Verdichtungsraum, mit Verbrennungsgasen zu mischen. Durch das Mischen mit den heißen Verbrennungsgasen wird eine weitere Vorwärmung der Luft bzw. des gasförmigen Brennmittels erreicht. Die Verbrennungsgase werden einer nochmaligen Verbrennung unterzogen. Dadurch werden eventuell verbliebene schädlicher Verbrennungsrückstände zerstört. Es wird eine besonders saubere Verbrennung erzielt.

Nach einem besonders vorteilhaften Merkmal werden die Verbrennungsgase beim Ausstoß aus dem Verdichtungsraum durch den Porenkörper geführt und dabei einer thermischen Reaktion unterworfen. Durch die der Verbrennung nachgeschaltete thermische Reaktion werden schädliche Verbrennungsgase vernichtet. Dabei wird zur Durchführung der thermischen Reaktion vorteilhafterweise die bei der vorhergehenden Verbrennung auf dem Porenkörper übertragene Wärme verwendet.

Es ist auch möglich, die Verbrennungsgase unmittelbar aus dem Verdichtungsraum auszustoßen. Das bietet sich vor allem dann an, wenn ein besonders rückstandsarmer Brennstoff eingesetzt wird.

Es wird bevorzugt, als Brennstoff Flüssigbrennstoff, wie Alkohol, Benzin, leichtes Heizöl und dergleichen, zu verwenden. Schließlich ist es auch denkbar, einen staubförmigen Feststoff, z.B. Kohlestaub, gemischt mit Luft einzusetzen.

Nach einer weiteren Lösung ist bei einer Vorrichtung zur Umwandlung von Wärme in Arbeit vorgesehen, dass die Verbrennung der Porenkörper den Brennraum erfüllt, so dass darin eine vollständige und flammenlose Verbrennung erfolgt. Die überraschenderweise gelingende flammenlose Verbrennung eines verdichteten gasförmigen Brennmittels bzw. eines brennbaren Gases oder eines Luft-/Brennstoff-Gemischs in einem Porenkörper bewirkt eine vollständige und schadstoffarme Verbrennung. Die Notwendigkeit einer kostenaufwendigen katalytischen Reinigung oder einer Abtrennung von Verbrennungsrückständen aus dem Abgasstrom der Verbrennungsgase entfällt. Wärme kann auf diese Weise mit einem hohen Wirkungsgrad und insbesondere unter Verwendung von leicht handhabbarem Flüssigbrennstoff, wie leichtes Heizöl, Benzin und dergleichen, in Arbeit umgesetzt werden.

Die bereits verfahrensseitig beschriebenen Ausgestaltungen sind auf die Vorrichtung anwendbar. Daneben sind die weiteren folgenden Ausgestaltungsformen erwähnenswert:

Es kann ein Einlasskanal mit mindestens einer in den Verdichtungsraum oder den Porenkörper mündenden Einlassöffnung vorgesehen sein. Der Einlasskanal dient zum Zuführen von Luft oder gasförmigem Brennmittel. Desgleichen kann ein Auslasskanal mit mindestens einer in den Verdichtungsraum oder den Porenkörper mündenden Auslassöffnung vorgesehen sein. Der Auslasskanal dient dem Abführen von Verbrennungsgasen. Sowohl die Einlass- als auch die Auslassöffnung können mittels einer zyklisch gesteuerten Verschlussvorrichtung, z.B. einem über einer Nockenwelle betätigbaren Ventil, verschlossen werden. Wenn die Einlassöffnung in den Porenkörper mündet, durchströmt zugeführte Luft bzw. das gasförmige Brennmittel den Porenkörper. Da der Porenkörper bei der vorhergehenden Verbrennung erwärmt worden ist, wird die Luft bzw. das gasförmige Brennmittel vorgeheizt. Wenn die Auslassöffnung in den Porenkörper mündet, werden die Verbrennungsgase beim Ausstoß aus dem Verdichtungsraum durch den heißen Porenkörper geführt und dabei einer thermischen Reaktion, d.h. einer zweiten Verbrennung unterzogen. Die thermische Reaktion bewirkt eine Vernichtung von möglicherweise gebildeten schädlichen Verbrennungsgasen.

Ein zur Umsetzung in mechanische Arbeit vorgesehenes Antriebsmittel kann einen Kolben, einen Kreiselkolben oder einen Turbinenrotor aufweisen. Sofern es sich dabei um einen Kolben handelt, ist der Verdichtungsraum zweckmäßigerweise durch einen mit einem Zylinderkopf einseitig verschlossenen Zylinder und einem hin- und her bewegbaren Kolben begrenzt. In diesem Fall kann der Porenkörper am Zylinderkopf angebracht sein, wobei vorteilhafterweise zwischen dem Porenkörper und dem Zylinderkopf eine wärmeisolierende, vorzugsweise aus Keramik hergestellte, Schicht vorgesehen ist.

Nach einem weiteren Ausgestaltungsmerkmal kann der Porenkörper in der Nähe der Ein- und/oder Auslassöffnung radial nach außen vorspringend vom Verdichtungsraum sich erstrecken. Ein so ausgebildeter Porenkörper ist vorzugsweise durch eine radial umlaufende Ausnehmung im Zylinderkopf gebildet. Ferner ist es möglich, dass der Porenkörper am Kolbenboden, vorzugsweise in einer am Kolbenboden vorgesehenen Ausnehmung, vorgesehen ist. In diesem Fall hat es sich als zweckmäßig erwiesen, eine Einrichtung zur Kühlung des Kolbenboden vorzusehen. Mittels der Einrichtung kann z.B. Öl an die dem Porenkörper gegenüberliegende Unterseite des Kolbenbodens gespritzt werden.

Nach einem weiteren Ausgestaltungsmerkmal weist der Porenkörper einen kommunizierenden Porenraum auf. Er kann vorzugsweise aus Metall, insbesondere Edelstahl oder Keramik, wie Aluminiumoxid, Aluminiumnitrid, Zikonoxid, Titanoxid, Siliziumkarbid oder dgl., hergestellt sein. Zur Optimierung der Strömungsverhältnisse kann der Porenkörper eine Mehrzahl von Schichten mit unterschiedlichem mittleren Porendurchmesser aufweisen.

Das gasförmige Brennmittel kann ein aus einem staubförmigen Feststoff, wie Kohlenstaub, und Luft bestehendes Gemisch sein.

Nach einem weiteren Ausgestaltungsmerkmal kann eine Einrichtung zur Erzeugung Luft-/Brennstoff-Gemischs außerhalb des Porenkörpers vorgesehen sein. Dabei kann es sich um einen Vergaser handeln. Zweckmäßigerweise kann eine Einrichtung zum Zuführen von Brennstoff in den Verdichtungs- oder den Porenkörper vorgesehen sein. Dabei kann es sich um eine mit einer Einspritzpumpe in Verbindung stehende Düse handeln.

Nachfolgend werden Ausführungsbeispiele der Erfindung anhand der Zeichnung näher erläutert. Hierin zeigen
- Fig. 1: eine schematische Querschnittsansicht durch den Zylinder einer ersten Verbrennungskraftmaschine, wobei der Kolben am oberen Totpunkt sich befindet,
- Fig. 2: die Querschnittsansicht nach Fig. 1, während des Ansaug-Takts,
- Fig. 3: eine schematische Querschnittsansicht nach Fig. 1, während des Verdichtungs-Takts,
- Fig. 4: eine schematische Querschnittsansicht nach Fig. 1, während des Verdichtungs-Takts und bei Brennstoffeinspritzung,
- Fig. 5: eine schematische Querschnittsansicht nach Fig. 1, am Ende des Verdichtungs-Takts und bei Zündung,
- Fig. 6: eine schematische Querschnittsansicht nach Fig. 1, während des Arbeits-Takts,
- Fig. 7: eine schematische Querschnittsansicht nach Fig. 1, während des Ausstoß-Takts,
- Fig. 8: eine schematische Querschnittsansicht durch den Zylinder einer zweiten Verbrennungskraftmaschine, wobei der Kolben am oberen Totpunkt sich befindet,
- Fig.9: eine schematische Querschnittsabsicht nach Fig. 8, während des Ansaug-Takts,
- Fig. 10: eine schematische Querschnittsansicht nach Fig. 8, während des Verdichtungs-Takts,
- Fig. 11: eine schematische Querschnittsansicht nach Fig. 8, während des Verdichtungs-Takts und bei Brennstoffeinspritzung,
- Fig. 12: eine schematische Querschnittsansicht nach Fig. 8, am Ende des Verdichtungs-Takts und bei Zündung,
- Fig. 13: eine schematische Querschnittsansicht nach Fig. 8, während des Arbeits-Takts,
- Fig. 14: eine schematische Querschnittsansicht nach Fig. 8, während des Ausstoß-Takts und
- Fig. 15: eine schematische Querschnittsansicht durch den Zylinder einer dritten Verbrennungskraftmaschine.

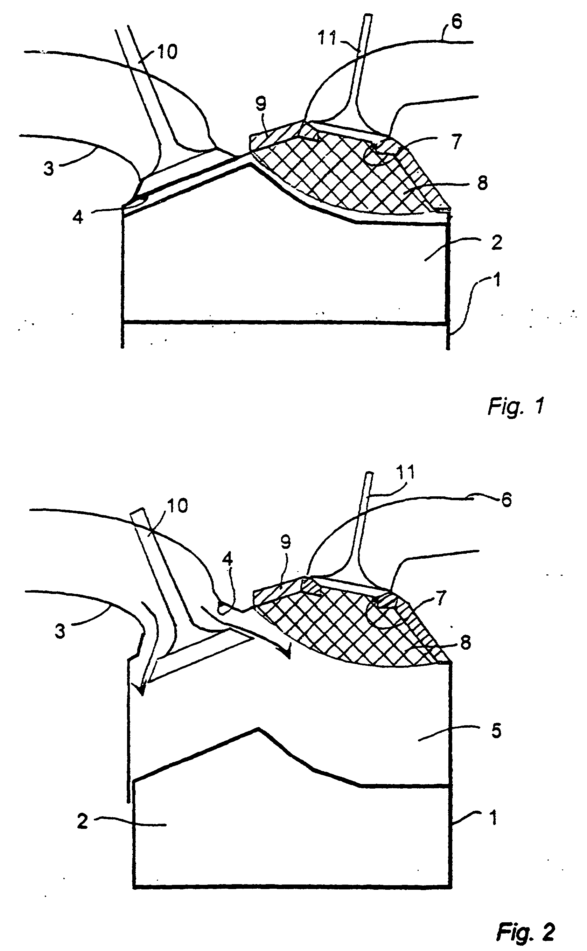

Die Fig. 1 bis 8 zeigen eine schematische Querschnittansicht durch einen Zylinder 1 einer ersten Verbrennungskraftmaschine. Ein im Zylinder 1 verschiebbar aufgenommener Kolben 2 befindet sich am oberen Totpunkt. Ein Einlaßkanal 3 mündet mit einer Einlaßöffnung 4 in einen Verdichtungsraum 5. Ein Auslaßkanal 6 mündet mit einer Auslaßöffnung 7 in einen Porenkörper 8. Der Porenkörper 8 erfüllt im wesentlichen den Raum, welcher zwischen einem Zylinderkopf 9 und dem am oberen Totpunkt befindlichen Kolben 2 verbleibt. Mittels eines Einlaßventils 10 ist die Einlaßöffnung 4 und mittels eines Auslaßventils 11 ist die Auslaßöffnung 7 verschließbar.

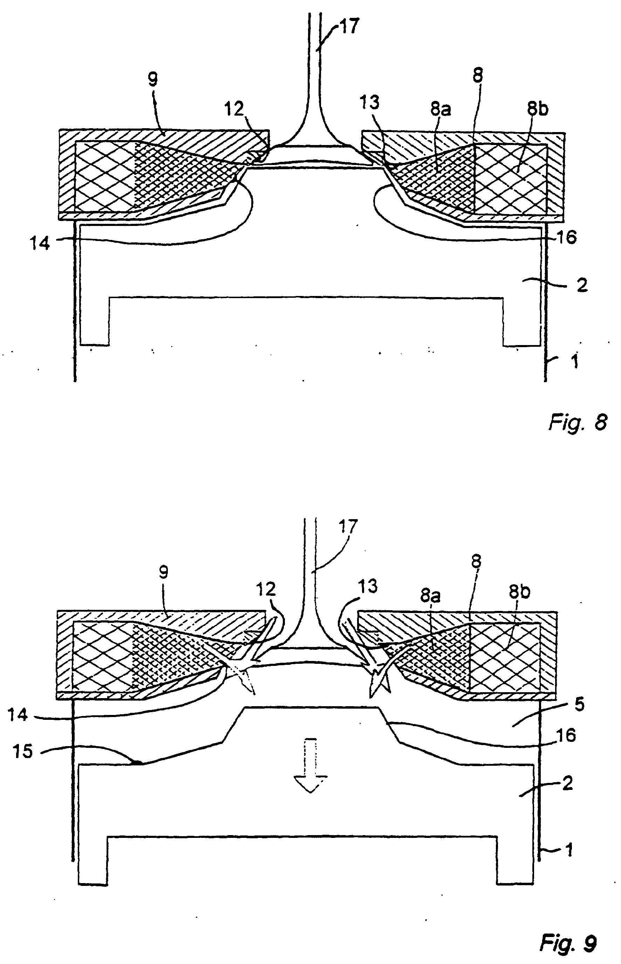

In den Fig. 8 bis 14 ist eine schematische Querschnittsansicht durch den Zylinder 1 einer zweiten Verbrennungskraftmaschine dargestellt. Der Porenkörper 8 ist hier in einer im Zylinderkopf 9 gebildeten radial umlaufenden Ausnehmung 13 vorgesehen, die sich in der Nähe einer einzigen Ein- und Auslaßöffnung 12 befindet. Eine konische Öffnungsfläche 14 verbindet den Porenkörper 8 mit dem Verdichtungsraum 5. Die konische Öffnungsfläche 14 erweitert sich in Richtung des Verdichtungsraums 5. Der Kolben 2 weist am Kolbenboden 15 einen zentralen Vorsprung 16 auf. Die Geometrie des Kolbenbodens 15 korrespondiert mit der Geometrie des Verdichtungsraums 5, so daß am oberen Totpunkt die Kontur des Kolbenbodens 15 in der Nähe der Kontur des Verdichtungsraums 15 sich befindet. Ein einziges Ein- und Auslaßventil 17 ist zum Verschließen der Ein- und Auslaßöffnung 12 vorgesehen.

Der Porenkörper 8 weist eine radial innenliegende Schicht 8a mit einem ersten Porendurchmesser und eine radial außenliegende Schicht 8b mit einem zweiten Porendurchmesser auf. Der zweite Porendurchmesser ist größer als der erste Porendurchmesser.

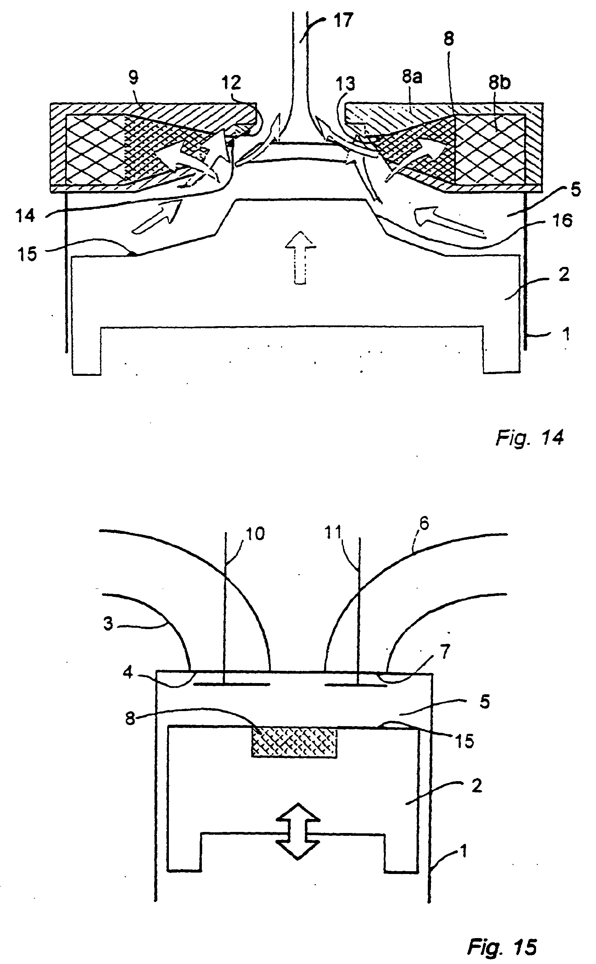

Fig. 15 zeigt eine schematische Querschnittsansicht durch den Zylinder 1 einer dritten Verbrennungskraftmaschine. Hier ist der Porenkörper 8 in einer am Kolbenboden 15 vorgesehenen zentrischen Vertiefung gebildet. Die Vertiefung ist mit dem Porenkörper 8 vollständig ausgefüllt. Der Porenkörper 8 bewegt sich hier gemeinsam mit dem Kolben 2 hin und her. Um einer Uberhitzung des Kolbenbodens 15 entgegenzuwirken, ist eine (hier nicht dargestellt) Einrichtung vorgesehen, mit der Öl auf die kurbelwellenseitige Unterseite des Kolbens 2 gespritzt wird.

Die Funktion der in den Fig. 1 bis 8 gezeigten ersten Wärmekraftmaschine ist die folgende:

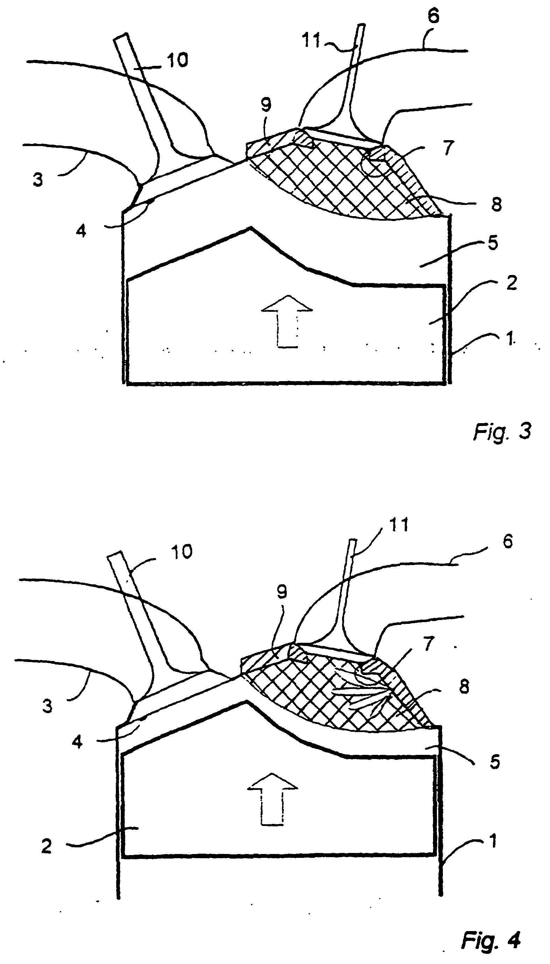

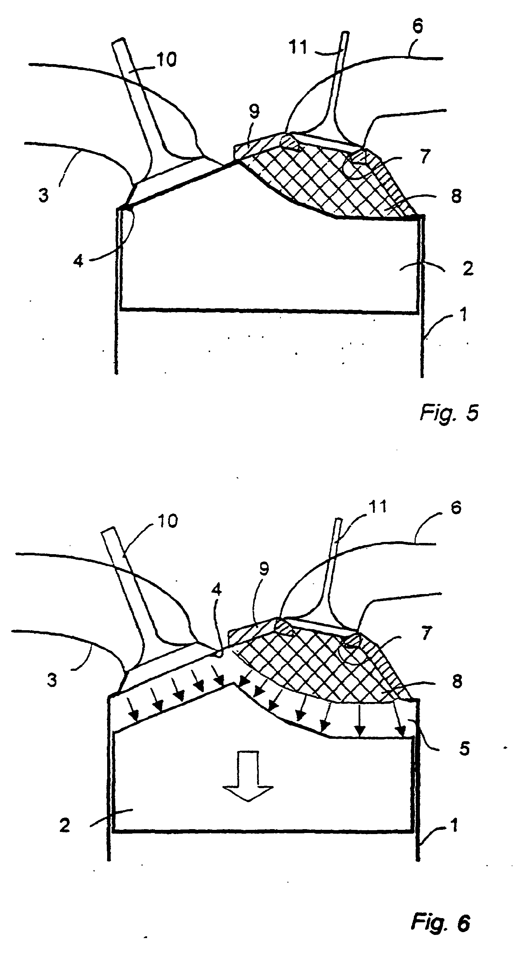

Während des in Fig. 2 gezeigten Ansaug-Takts bewegt sich der Kolben 2 vom Zylinderkopf 9 weg. Das Einlaßventil 10 ist geöffnet. Durch den im Zylinder 1 gebildeten Unterdruck wird Luft durch die Einlaßöffnung 4 in den Verdichtungsraum 5 angesaugt. Dann wird das Einlaßventil 10 geschlossen und der Kolben 2 in Richtung des Zylinderkopfs 9 bewegt. Dabei wird die angesaugte Luft verdichtet und gleichzeitig in den Porenkörper 8 gedrückt. Dieser sogenannte Verdichtungs-Takt ist in Fig. 3 gezeigt. Kurz vor Erreichen des oberen Totpunkts wird, wie aus Fig. 4 ersichtlich ist, Flüssigbrennstoff in den Porenkörper 8 eingespritzt. Der eingespritzte Flüssigbrennstoff verdampft durch die Wirkung der bei der vorhergehenden Verbrennung im Porenkörper 8 gespeicherten Wärme. Es entsteht ein hochturbulentes Luft-/Brennstoff-Gemisch. Dieses hochturbulente Luft-/Brennstoff-Gemisch wird weiter verdichtet und aufgeheizt bis der Kolben 2 den oberen Totpunkt erreicht. Diese Situation ist in Fig. 5 dargestellt. Insbesondere durch die Verdichtung wird bewirkt, daß am oberen Totpunkt die Zündtemperatur des Luft-/Brennstoff-Gemischs überschritten wird. Es kommt zur spontanen Zündung und zur flammenfreien Verbrennung des Luft-/Brennstoff-Gemischs im Porenkörper 8. Die dadurch bewirkte Volumenexpansion drückt den Kolben 2 vom Zylinderkopf 9 weg. Dieser sogenannte Arbeits-Takt ist in Fig. 6 gezeigt.

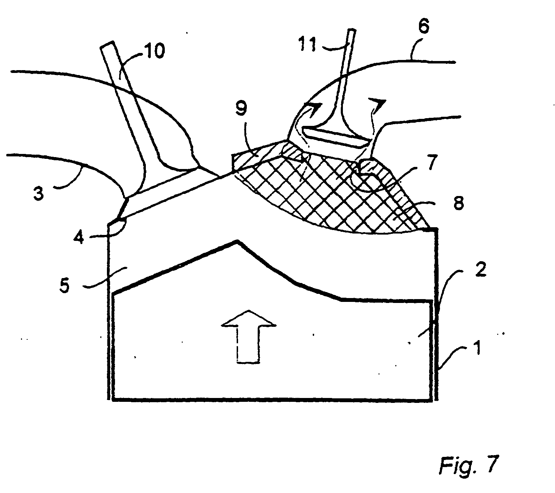

Fig. 7 zeigt den Ausstoß-Takt. Dabei bewegt sich der Kolben 2 erneut in Richtung des Zylinderkopfs 9. Das Auslaßventil 11 ist geöffnet. Die Verbrennungsgase werden durch den heißen Porenkörper 8 in den Auslaßkanal 6 gedrückt. Beim Durchtritt durch den Porenkörper 8 werden die Verbrennungsgase einer thermischen Reaktion unterzogen. Dabei werden schädliche Verbrennungsgase vernichtet. Die Verbrennungsgase verlassen gereinigt den Porenkörper 8. Nachfolgend wird das Auslaßventil 11 wieder geschlossen und es beginnt ein neuer Arbeitszyklus mit einem Einlaß-Takt.

Beim kontinuierlichen Betrieb dienen die im Porenkörper 8 von der jeweils vorhergehenden Verbrennung verbliebenen Verbrennungsgase zum Aufheizen des Luft-/Brennstoff-Gemischs. Diese Verbrennungsgase werden einer zweiten Verbrennung unterzogen. Auch das trägt zu einer besonders schadstoffarmen Verbrennung bei.

Die Funktion der in den Fig. 8 bis 14 gezeigten zweiten Wärmekraftmaschine ist die folgende:

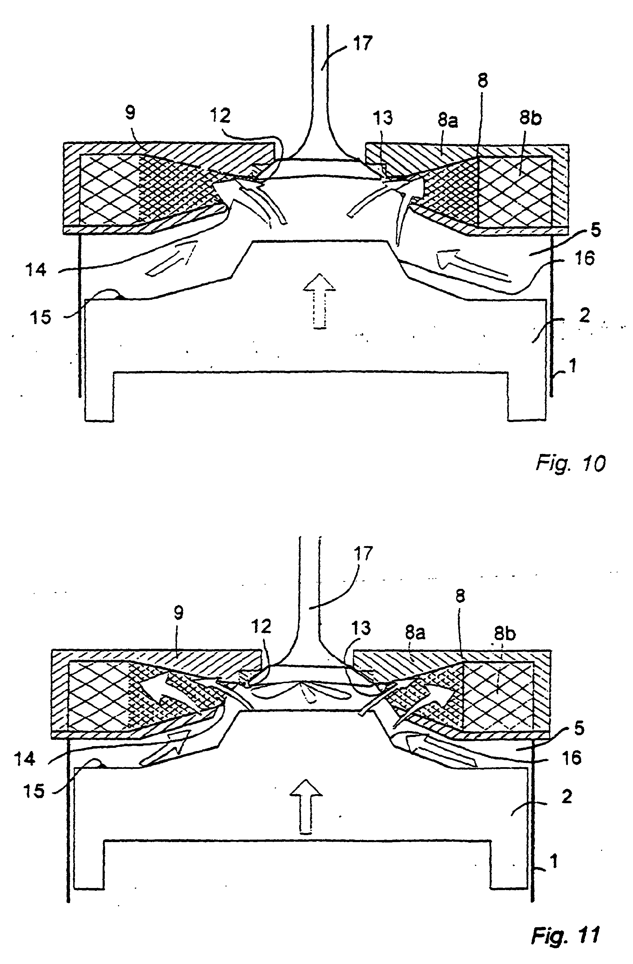

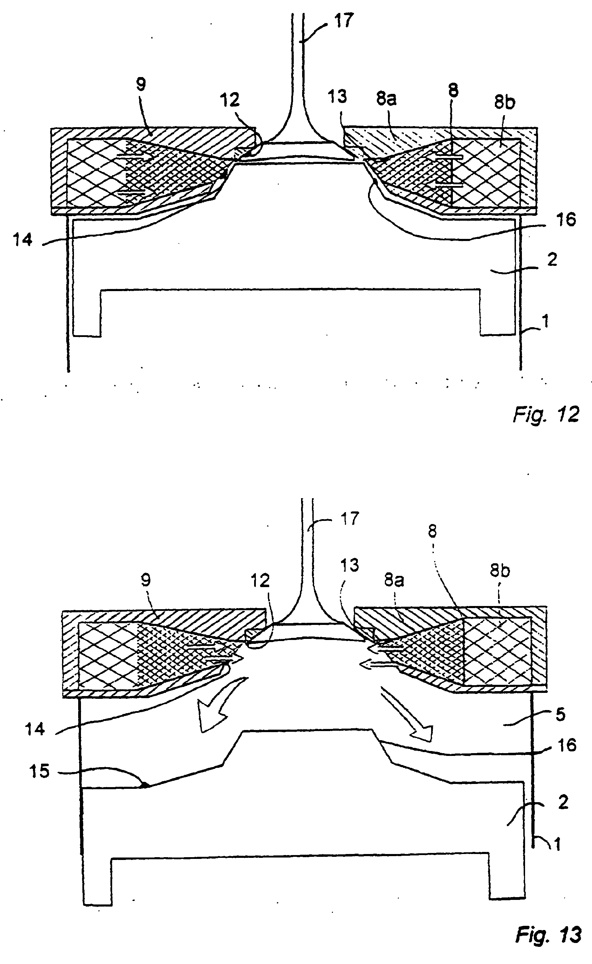

Beim in Fig. 9 gezeigten Ansaug-Takt ist das einzige Ein- und Auslaßventil 17 geöffnet. Luft wird durch die Einlaßöffnung 4 in den Verdichtungsraum 5 angesaugt. Gleichzeitig werden aus dem Porenkörper 8 von der vorhergehenden Verbrennung verbliebene Verbrennungsgase in den Verdichtungsraum 5 gesaugt. Beim in Fig. 10 gezeigten Verdichtungs-Takt wird das einzige Ein- und Auslaßventil 17 geschlossen und der Kolben 2 im Zylinder 1 in Richtung des Zylinderkopfs 9 bewegt. Das aus Luft und Verbrennungsgasen bestehende Gemisch wird verdichtet und in den Porenkörper 8 gedrückt. Dann wird in den Verdichtungsraum 5, wie in Fig. 11 gezeigt ist, Flüssigbrennstoff gespritzt. Es bildet sich ein hochturbulentes Luft-/Brennstoff-Gemisch, welches bei weiterer Verdichtung in den Porenkörper 8 gedückt wird und dort selbsttätig zündet (siehe Fig. 12).

Durch die dabei entstehende Volumenexpansion werden die Verbrennungsgase aus dem Porenkörper 8 in den Verdichtungsraum 5 überführt. Gleichzeitig bewegt sich der Kolben 2 vom Zylinderkopf 9 weg. Das ist in Fig. 13 schematisch gezeigt.

Anschließend folgt der Ausstoß-Takt. Wie aus Fig. 14 ersichtlich ist, öffnet sich das einzige Ein- und Auslaßventil 17. Gleichzeitig bewegt sich der Kolben 2 in Richtung des Zylinderkopfs 9. Die Verbrennungsgase werden aus dem Verbrennungsraum 5 gedrückt. Ein kleiner Teil der Verbrennungsgase gelangt während des Ausstoß-Takts in den Porenkörper 8. Dieser Teil der Verbrennungsgase wird beim nächsten Zyklus einer nochmaligen Verbrennung unterzogen.

Bei der in Fig. 15 gezeigten dritten Wärmekraftmaschine ist der Porenkörper 8 im Kolbenboden 15 vorgesehen. Diese Variante ist insbesondere bei Verwendung eines außerhalb des Verdichtungsraums 5 hergestellten Luft-/Brennstoff-Gemischs oder eines brennbaren Gases geeignet.

### Bezugszeichenliste

- 1: Zylinder
- 2: Kolben
- 3: Einlaßkanal
- 4: Einlaßöffnung
- 5: Verdichtungsraum
- 6: Auslaßkanal
- 7: Auslaßöffnung
- 8: Porenkörper
- 8a: innenliegende Schicht.
- 8b: außenliegende Schicht
- 9: Zylinderkopf
- 10: Einlaßventil
- 11: Auslaßventil
- 12: Ein- und Auslaßöffnung
- 13: Ausnehmung
- 14: Öffnungsfläche
- 15: Kolbenboden
- 16: Vorsprung
- 17: Ein- und Auslaßventil

## Patentansprüche

1. Verfahren zur Umwandlung von Wärme in Arbeit, wobei ein brennbares Gas oder ein Luft-/Brennstoff-Gemisch verdichtet, nachfolgend in einem Porenkörper (8) verbrannt und eine infolge der Verbrennung erzeugte Volumenexpansion zur Gewinnung mechanischer Arbeit genutzt wird, **dadurch gekennzeichnet, dass** die Verbrennung vollständig und flammenlos in dem den Brennraum erfüllenden Porenkörper (8) erfolgt.

2. Verfahren nach Anspruch 1, wobei das brennbare Gas oder das Luft-/Brennstoff-Gemisch vor der Verbrennung im Porenkörper (8) vorgeheizt wird.

3. Verfahren nach Anspruch 1 oder 2, wobei der Porenkörper (8) mit einem Verdichtungsraum (5) in Verbindung steht.

4. Verfahren nach einem der vorhergehenden Ansprüche, wobei Luft oder das brennbare Gas oder das Luft-/Brennstoff-Gemisch unmittelbar dem Verdichtungsraum (5) zugeführt wird.

5. Verfahren nach einem der vorhergehenden Ansprüche, wobei Luft oder das brennbare Gas oder das Luft-/Brennstoff-Gemisch durch den Porenkörper (8) dem Verdichtungsraum (5) zugeführt wird.

6. Verfahren nach einem der vorhergehenden Ansprüche, wobei die Luft oder das brennbare Gas oder das Luft-/Brennstoff-Gemisch unter gleichzeitiger Verdichtung vom Verdichtungsraum (5) in den Porenraum überführt wird.

7. Verfahren nach einem der vorhergehenden Ansprüche, wobei das brennbare Gas oder das Luft-/Brennstoff-Gemisch im Porenkörper (8) mit Verbrennungsgasen gemischt wird.

8. Verfahren nach einem der vorhergehenden Ansprüche, wobei die Luft oder das brennbare Gas oder das Luft-/Brennstoff-Gemisch außerhalb des Porenkörpers (8), vorzugsweise im Verdichtungsraum (5), mit Verbrennungsgasen gemischt wird.

9. Verfahren nach einem der vorhergehenden Ansprüche, wobei die Verbrennungsgase beim Ausstoß aus dem Verdichtungsraum (5) durch den Porenkörper (8) geführt und dabei einer thermischen Reaktion unterworfen werden.

10. Verfahren nach einem der vorhergehenden Ansprüche, wobei die Verbrennungsgase unmittelbar aus dem Verdichtungsraum (5) ausgestoßen werden.

11. Verfahren nach einem der vorhergehenden Ansprüche, wobei als brennbares Gas wie Propan oder Butan verwendet wird.

12. Verfahren nach einem der vorhergehenden Ansprüche, wobei das Luft-/Brennstoff-Gemisch im Wesentlichen außerhalb des Porenkörper (8) hergestellt wird.

13. Verfahren nach einem der Ansprüche 1 bis 11, wobei das Luft-/Brennstoff-Gemisch im Wesentlichen innerhalb des Porenkörper (8) hergestellt wird, indem der Brennstoff unmittelbar dem Porenkörper (8) zugeführt wird.

14. Verfahren nach einem der vorhergehenden Ansprüche, wobei der Brennstoff im Porenkörper (8) verdampft wird.

15. Vorrichtung zur Umwandlung von Wärme in Arbeit, wobei ein brennbares Gas oder ein Luft-/Brennstoff-Gemisch verdichtbar, nachfolgend verbrennbar und die bei der Verbrennung erzeugte Volumenexpansion in mechanische Arbeit umsetzbar ist, wobei die Verbrennung des verdichteten brennbaren Gases oder des Luft-/Brennstoff-Gemischs in einem Porenkörper (8) erfolgt, **dadurch gekennzeichnet, dass** der Porenkörper (8) den Brennraum erfüllt, so dass in dem Porenkörper eine vollständige und flammenlose Verbrennung erfolgt.

16. Vorrichtung nach Anspruch 15, wobei das brennbare Gas oder das Luft-/Brennstoff-Gemisch vor der Verbrennung im Porenkörper (8) vorheizbar ist.

17. Vorrichtung nach Anspruch 15 oder 16, wobei der Porenkörper (8) mit einem Verdichtungsraum (5) in Verbindung steht.

18. Vorrichtung nach einem der Ansprüche 15 bis 17, wobei ein Einlasskanal (3) mit mindestens einer in den Verdichtungsraum (5) oder den Porenkörper (8) mündenden Einlassöffnung (4) vorgesehen ist.

19. Vorrichtung nach einem der Ansprüche 15 bis 18, wobei ein Auslasskanal (6) mit mindestens einer in den Verdichtungsraum (5) oder den Porenkörper (8) mündenden Auslassöffnung (7) vorgesehen ist.

20. Vorrichtung nach einem der Ansprüche 15 bis 19, wobei ein zur Umsetzung von Wärme in Arbeit vorgesehenes Antriebsmittel einen Kolben (2), einen Kreiselkolben oder einen Turbinenrotor aufweist.

21. Vorrichtung nach einem der Ansprüche 15 bis 20, wobei der Verdichtungsraum (5) durch einen mit einem Zylinderkopf (10) einseitig verschlossenen Zylinder (1) und einen hin- und herbewegbaren Kolben (2) begrenzt ist.

22. Vorrichtung nach Anspruch 21, wobei der Porenkörper (8) am Zylinderkopf (10) angebracht ist.

23. Vorrichtung nach einem der Ansprüche 21 oder 22, wobei zwischen dem Porenkörper (8) und dem Zylinderkopf (10) eine wärmeisolierende, vorzugsweise aus Keramik hergestellte, Schicht vorgesehen ist.

24. Vorrichtung nach einem der Ansprüche 15 bis 23, wobei der Porenkörper (8) in der Nähe der Ein- (4) und/oder Auslassöffnung (7) radial nach außen vorspringend vom Verdichtungsraum (5) sich erstreckt.

25. Vorrichtung nach einem der Ansprüche 15 bis 24, wobei ein Mittel zum Zünden des brennbaren Gases oder des Luft-/Brennstoff-Gemischs im Porenkörper (8) vorgesehen ist.

26. Vorrichtung nach einem der Ansprüche 22 bis 25, wobei der Porenkörper (8) am Kolbenboden (15) vorgesehen ist.

27. Vorrichtung nach Anspruch 26, wobei eine Einrichtung zur Kühlung des Kolbenbodens (15) vorgesehen ist.

28. Vorrichtung nach einem der Ansprüche 15 bis 27, wobei der Porenkörper (8) einen kommunizierenden Porenraum aufweist.

29. Vorrichtung nach einem der Ansprüche 15 bis 28, wobei der Porenkörper (8) aus Keramik oder Metall, vorzugsweise rostfreiem Stahl, hergestellt ist.

30. Vorrichtung nach einem der Ansprüche 15 bis 29, wobei der Porenkörper (8) eine Mehrzahl von Schichten (8a, 8b) mit unterschiedlichem mittleren Porendurchmesser aufweist.

31. Vorrichtung nach einem der Ansprüche 15 bis 30, wobei das brennbare Gas Propan oder Butan ist.

32. Vorrichtung nach einem der Ansprüche 15 bis 31, wobei eine Einrichtung zur Erzeugung des Luft-/Brennstoff-Gemischs außerhalb des Porenkörpers (8) vorgesehen ist.

33. Vorrichtung nach einem der Ansprüche 15 bis 31, wobei eine Einrichtung zum Zuführen von Brennstoff in den Verdichtungsraum (5) oder den Porenkörper (8) vorgesehen ist.

## Claims

1. Method for the conversion of heat into work, wherein an combustible gas or an air/fuel mixture is compressed, then burned in a pore body (8) and a volume expansion generated due to the combustion is utilized to obtain mechanical work, **characterized** thereby that the combustion occurs completely and without flames in the pore body (8) filling the combustion chamber.

2. Method as defined in claim 1, wherein the combustible gas or the air/fuel mixture is preheated before combustion in the pore body (8).

3. Method as defined in claim 1 or 2, wherein the pore body (8) is connected with a compression chamber (5).

4. Method as defined in one of the preceding claims, wherein air or the combustible gas or the air/fuel mixture is fed directly to the compression chamber (5).

5. Method as defined in one of the preceding claims, wherein air or the combustible gas or the air/fuel mixture is fed through the pore body (8) to the compression chamber (5).

6. Method as defined in one of the preceding claims, wherein the air or the combustible gas or the air/fuel mixture is transferred from the compression chamber (5) to the pore space while being compressed at the same time.

7. Method as defined in one of the preceding claims, wherein the combustible gas or the air/fuel mixture is mixed in the pore body (8) with combustion gases.

8. Method as defined in one of the preceding claims, wherein the air or the combustible gas or the air/fuel mixture is mixed with combustion gases outside the pore body (8), preferably in the compression chamber (5).

9. Method as defined in one of the preceding claims, wherein the combustion gases are transported through the pore body (8) when emitted from the compression chamber (5) and thereby subjected to a thermal reaction.

10. Method as defined in one of the preceding claims, wherein the combustion gases are emitted directly from the compression chamber (5).

11. Method as defined in one of the preceding claims, wherein a combustible gas such as butane or propane is used as the combustible gas.

12. Method as defined in one of the preceding claims, wherein the air/fuel mixture is made essentially outside the pore body (8).

13. Method as defined in one of the preceding claims, wherein the air/fuel mixture is made essentially within the pore body (8), by adding the fuel directly to the pore body (8).

14. Method as defined in one of the preceding claims, wherein the fuel is vaporized in the pore body (8).

15. Device for the conversion of heat into work, wherein a combustible gas or an air/fuel mixture can be compressed, then burned and the volume expansion generated during the combustion can be converted into mechanical work, wherein the combustion of the compressed, combustible gas or the air/fuel mixture takes place in a pore body (8), **characterized** thereby that the pore body (8) fills the combustion chamber so that a complete and flameless combustion takes place in the pore body.

16. Device as defined in claim 15, wherein the combustible gas or the air/fuel mixture can be preheated before combustion in the pore body (8).

17. Device as defined in claim 15 or 16, wherein the pore body (8) is connected to a compression chamber (5).

18. Device as defined in one of the claims 15 to 17, wherein an intake passageway (3) with at least one intake opening (4) emptying into the compression chamber (3) or the pore body (8) is provided.

19. Device as defined in one of the claims 15 to 18, wherein an outlet passageway (6) with at least one outlet opening (7) emptying into the compression chamber (5) or the pore body (8) is provided.

20. Device as defined in one of the claims 15 to 19, wherein a driving means for conversion of heat into work has a piston (2), a rotary piston or a turbine rotor.

21. Device as defined in one of the claims 15 to 20, wherein the combustion chamber (5) is bounded by a cylinder (1) which is closed on one side with a cylinder head (10) and a piston (2) which can be moved back and forth.

22. Device as defined in claim 21, wherein the pore body (8) is installed on the cylinder head (10).

23. Device as defined in one of the claims 21 or 22, wherein a heat-insulating layer, preferably made of ceramic, is provided between the pore body (8) and the cylinder head (10).

24. Device as defined in one of the claims 15 to 23, wherein the pore body (8) in the vicinity of the intake (4) and/or outlet opening (7) extends radially to the outside protruding from the compression chamber (5).

25. Device as defined in one of the claims 15 to 24, wherein a means of igniting the combustible gas or the air/fuel mixture is provided in the pore body (8).

26. Device as defined in one of the claims 22 to 25, wherein the pore body (8) is provided on the piston crown (15).

27. Device as defined in claim 26, wherein a unit is provided for cooling the piston crown (15).

28. Device as defined in one of the claims 15 to 27, wherein the pore body (8) is equipped with a communicating pore space.

29. Device as defined in one of the claims 15 to 28, wherein the pore body (8) is made of ceramic or metal, preferably of stainless steel.

30. Device as defined in one of the claims 15 to 29, wherein the pore body (8) has a plurality of layers (8a, 8b) with different mean pore diameter.

31. Device as defined in one of the claims 15 to 30, wherein the combustible gas is propane or butane.

32. Device as defined in one of the claims 15 to 31, wherein a unit for the generation of the air/fuel mixture is provided outside the pore body (8).

33. Device as defined in one of the claims 15 to 31, wherein a unit for adding fuel to the compression chamber (5) or the pore body (8) is provided.

## Revendications

1. Procédé pour la transformation de chaleur en travail, un gaz combustible ou un mélange air / combustible étant comprimé, puis brûlé dans un corps poreux (8) et une expansion de volume générée par suite de la combustion étant utilisée pour l'obtention de travail mécanique, **caractérisé en ce que** la combustion est effectuée intégralement et sans flamme dans le corps poreux (8) remplissant la zone de combustion.

2. Procédé selon la revendication 1, le gaz combustible ou le mélange air / combustible étant préchauffé dans le corps poreux (8) avant la combustion.

3. Procédé selon la revendication 1 ou 2, le corps poreux (8) communiquant avec une zone de compression (5).

4. Procédé selon l'une des revendications précédentes, l'air ou le gaz combustible ou le mélange air / combustible étant amené directement à la zone de compression (5).

5. Procédé selon l'une des revendications précédentes, l'air ou le gaz combustible ou le mélange air / combustible étant amené à la zone de compression (5) par le corps poreux (8).

6. Procédé selon l'une des revendications précédentes, l'air ou le gaz combustible ou le mélange air / combustible étant convoyé sous compression simultanée de la zone de compression (5) à l'espace des pores.

7. Procédé selon l'une des revendications précédentes, le gaz combustible ou le mélange air / combustible étant mélangé à des gaz de combustion dans le corps poreux (8).

8. Procédé selon l'une des revendications précédentes, l'air ou le gaz combustible ou le mélange air / combustible étant mélangé à des gaz de combustion hors du corps poreux (8), de préférence dans la zone de compression (5).

9. Procédé selon l'une des revendications précédentes, les gaz de combustion étant conduits lors du rejet de la zone de compression (5) par le corps poreux (8) tout en étant soumis à une réaction thermique.

10. Procédé selon l'une des revendications précédentes, les gaz de combustion étant rejetés directement de la zone de compression (5).

11. Procédé selon l'une des revendications précédentes, du propane ou du butane servant de gaz combustible.

12. Procédé selon l'une des revendications précédentes, le mélange air / combustible étant produit essentiellement hors du corps poreux (8).

13. Procédé selon l'une des revendications 1 à 11, le mélange air / combustible étant produit essentiellement dans le corps poreux (8), le combustible étant amené directement au corps poreux (8).

14. Procédé selon l'une des revendications précédentes, le combustible étant évaporé dans le corps poreux (8).

15. Dispositif pour la transformation de chaleur en travail, un gaz combustible ou un mélange air / combustible pouvant être comprimé, puis brûlé et l'expansion de volume générée lors de la combustion étant convertible en travail mécanique, la combustion du gaz combustible comprimé ou du mélange air / combustible étant effectuée dans un corps poreux (8), **caractérisé en ce que** le corps poreux (8) remplit la zone de combustion de sorte qu'une combustion intégrale et sans flamme soit effectuée dans le corps poreux.

16. Dispositif selon la revendication 15, le gaz combustible ou le mélange air / combustible pouvant être préchauffé dans le corps poreux (8) avant la combustion.

17. Dispositif selon la revendication 15 ou 16, le corps poreux (8) communiquant avec une zone de compression (5).

18. Dispositif selon l'une des revendications 15 à 17, un canal d'admission (3) étant prévu avec au moins un orifice d'admission (4) débouchant dans la zone de compression (5) ou dans le corps poreux (8).

19. Dispositif selon l'une des revendications 15 à 18, un canal de sortie (6) étant prévu avec au moins un orifice de sortie (7) débouchant dans la zone de compression (5) ou dans le corps poreux (8).

20. Dispositif selon l'une des revendications 15 à 19, un moyen d'entraînement prévu pour la transformation de la chaleur en travail présentant un piston (2), un piston centrifuge ou un rotor de turbine.

21. Dispositif selon l'une des revendications 15 à 20, la zone de compression (5) étant limitée par un cylindre (1) fermé d'un côté par une tête de cylindre (10) et un piston (2) à déplacement alternatif.

22. Dispositif selon la revendication 21, le corps poreux (8) étant monté sur la tête de cylindre (10).

23. Dispositif selon l'une des revendications 21 ou 22, une couche calorifuge, de préférence en céramique, étant prévue entre le corps poreux (8) et la tête de cylindre (10).

24. Dispositif selon l'une des revendications 15 à 23, le corps poreux (8) s'étendant à proximité de l'orifice d'admission (4) et/ou de sortie (7) radialement vers l'extérieur, en saillie de la zone de compression (5).

25. Dispositif selon l'une des revendications 15 à 24, un moyen pour l'amorçage du gaz combustible ou du mélange air / combustible étant prévu dans le corps poreux (8).

26. Dispositif selon l'une des revendications 22 à 25, le corps poreux (8) étant prévu sur le fond du piston (15).

27. Dispositif selon la revendication 26, un équipement étant prévu pour le refroidissement du fond du piston (15).

28. Dispositif selon l'une des revendications 15 à 27, le corps poreux (8) présentant un espace des pores communicant.

29. Dispositif selon l'une des revendications 15 à 18, le corps poreux (8) étant en céramique ou en métal, de préférence en acier inoxydable.

30. Dispositif selon l'une des revendications 15 à 29, le corps poreux (8) présentant de nombreuses couches (8a, 8b) d'un diamètre de pores moyen différent.

31. Dispositif selon l'une des revendications 15 à 30, le gaz combustible étant du propane ou du butane.

32. Dispositif selon l'une des revendications 15 à 31, un équipement étant prévu pour la génération du mélange air / combustible hors du corps poreux (8).

33. Dispositif selon l'une des revendications 15 à 31, un équipement étant prévu pour l'amenée de combustible dans la zone de compression (5) ou dans le corps poreux (8).
